# EUROPÄISCHE PATENTSCHRIFT

(11) **EP 2 456 798 B1**
(45) Veröffentlichungstag und Bekanntmachung des Hinweises auf die Patenterteilung: **14.06.2017**
(21) Anmeldenummer: 10732360.2
(22) Anmeldetag: 13.07.2010
(51) Int. Cl.: C08G 12/12, C08G 12/40, C08G 12/42, C08L 61/24, C09D 161/24

(54) **VERFAHREN ZUR HERSTELLUNG VON KONDENSATIONSHARZEN UND DEREN VERWENDUNG**
PROCESS FOR PREPARING CONDENSATION RESINS AND THE USE THEREOF
PROCÉDÉ POUR PRODUIRE DES RÉSINES DE CONDENSATION ET LEUR UTILISATION

(30) Priorität: 21.07.2009 EP 09165966; 29.07.2009 EP 09166738; 01.07.2010 EP 10168154
(43) Veröffentlichungstag der Anmeldung: 30.05.2012
(73) Patentinhaber: BASF SE, 67056 Ludwigshafen am Rhein (DE)
(72) Erfinder: MEUER, Stefan, 67549 Worms (DE); MENZEL, Klaus, 67069 Ludwigshafen (DE); SCHERR, Günter, 67065 Ludwigshafen (DE)
(74) Vertreter: BASF IP Association
(86) Internationale Anmeldenummer: PCT/EP2010/060044
(87) Internationale Veröffentlichungsnummer: WO 2011/009765

(56) Entgegenhaltungen:
- EP-A2- 0 033 115
- WO-A1-2007/028752
- DE-A1- 3 525 438
- US-A- 2 214 851

## Beschreibung

Die vorliegende Erfindung betrifft neue Kondensationsharze aus Harnstoff, Formaldehyd und CH-aciden Aldehyden, Verfahren zu deren Herstellung sowie deren Verwendung.

Kondensationsprodukte aus Harnstoff bzw. seinen Derivaten mit Formaldehyd und CH-aciden Aldehyden sind bereits aus der Patentliteratur bekannt. Derartige Kondensationsharze werden häufig zur Bereitung von Pigmentpräparationen eingesetzt. Damit die Kondensationsharze in den Anwendungen stabil bleiben, wird während der Herstellung das Harz mit starken Basen behandelt. Dies ist als Vorsorge gegen Rückspaltung und Abspaltung insbesondere von Kohlenstoffmonoxid beispielsweise beschrieben in EP 2794 A1 oder EP 271776 A2.

Nachteilig an dieser Art der Stabilisierung ist, dass die Stabilisierung mit Hilfe von Natrium- oder Kaliumalkoholaten in wasserfreiem Medium erfolgen muss und somit durch die Wasserabtrennung hohe Anforderungen an die technische Durchführung des Verfahrens stellt. Weiterhin erfordert die Behandlung mit starken Basen eine anschließende Neutralisierung mit Säure und somit nicht nur einen weiteren Verfahrensschritt, sondern auch eine erhöhte Salzfracht, die aus dem Reaktionsgemisch durch Wäsche entfernt werden muss.

Des Weiteren wird durch die Nachbehandlung die Lagerstabilität der Produkte erhöht. Es wird vermutet, dass durch diese basische Nachbehandlung freie Aldehydgruppen im Kondensationsprodukt zersetzt werden, beispielsweise in Form einer Disproportionierung, so dass Rück- oder Folgereaktionen des Kondensationsproduktes vermindert werden. Somit sind für die Nachbehandlung des Kondensationsproduktes solche Verbindungen einsetzbar, die dafür bekannt sind, Aldehydgruppen abreagieren zu lassen, insbesondere starke Basen und speziell Alkoholate.

DE 3525438 A1 offenbart ein zweistufiges Verfahren zur Herstellung von Kondensationsharzen, in dem zunächst Diamin und Harnstoff zu den korrespondierenden Diharnstoffen umgesetzt werden. Diese Schritt kann lediglich optional in Gegenwart von Dihydroxyverbindungen durchgeführt werden.

EP 33115 A2 offenbart ein Verfahren, in dem Harnstoff mit iso-Butyraldehyd und Formaldehyd im Verhältnis 1:1:1 zunächst sauer und anschließend mit einem weiteren Äquivalent Formaldehyd basisch umgesetzt werden. Das so erhaltene Reaktionsprodukt wird anschließend, also in einem Folgeschritt mit einem Alkohol oder Glykol sauer verethert.

WO 2007/28752 A1 offenbart die Herstellung von Kondensationsharzen aus Harnstoff, Formaldehyd und CH-acidem Aldehyd. Die Stabilisierung des Produktes erfolgt mit Hilfe von Natriummethylat.

Aufgabe der vorliegenden Erfindung war es, Kondensationsprodukte aus Harnstoff, Formaldehyd und CH-aciden Aldehyden zu entwickeln, das auf eine einfachere Art stabilisiert werden kann.

Die Aufgabe wurde gelöst durch ein Verfahren zur Herstellung von Kondensationsharzen aus mindestens einem, bevorzugt genau einem Harnstoff, Formaldehyd und mindestens einem, bevorzugt genau einem CH-aciden Aldehyd, wobei man Harnstoffe der allgemeinen Formel (I) und/oder (II) 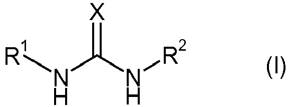 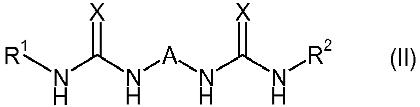 worin R¹ und R² unabhängig voneinander Wasserstoff oder gleiche oder verschiedene C₁ - C₂₀-Alkylreste, A einen C₁ - C₂₀-Alkylenrest und X Sauerstoff oder Schwefel bedeuten, mit Formaldehyd und einem CH-aciden Aldehyd der allgemeinen Formel (III) 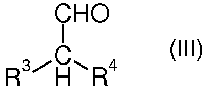 worin die Reste R³ und R⁴ unabhängig voneinander gleiche oder verschiedene Alkyl-, Cycloalkyl-, Aryl-, oder Alkylarylreste bedeuten oder R³ und R⁴ gemeinsam einen Ring bilden können, im Temperaturbereich zwischen 60 und 150°C in Gegenwart von Säuren, gegebenenfalls in Gegenwart von Lösungs- und/oder Verdünnungsmittel umsetzt, wobei man die Reaktion des mindestens einen Harnstoffs, Formaldehyd und des mindestens einen CH-aciden Aldehyds in einem Molverhältnis von 1 zu 2 bis 15 zu 2 bis 15 zumindest teilweise in Gegenwart mindestens einer Verbindung (IV) durchführt, ausgewählt aus der Gruppe bestehend aus Diolen, Diaminen, Aminoalkoholen und Mercaptoalkoholen, die zwei nukleophile Gruppen aufweist, ausgewählt aus der Gruppe bestehend aus Hydroxygruppen (-OH), primären Aminogruppen (-NH₂), sekundären Aminogruppen (-NH-) und Thiolgruppen (-SH).

Ein Vorteil des erfindungsgemäßen Verfahrens besteht darin, dass man auf die basische Nachbehandlung, beispielsweise mit Alkalialkoholaten in wasserfreiem Medium verzichten kann.

Zudem weisen die nach dem erfindungsgemäßen Verfahren erhaltenen Kondensationsprodukte eine geringere Viskosität als vergleichbare Produkte auf, die mit starken Basen stabilisiert sind, was die Präparationen leichter handhabbar macht (verbesserte Rheologie).

Dies ermöglicht einen erhöhten Festkörpergehalt in Pigmentpräparationen, was die Notwendigkeit zur Verwendung von Lösungsmitteln verringert, so dass geringere organische Emissionen (VOC) möglich sind.

Die erfindungsgemäßen Kondensationsharze weisen in der Regel ein zahlenmittleres Molgewicht Mₙ von 400 bis weniger als 1000 g/mol, bevorzugt von 450 bis 950 g/mol und besonders bevorzugt von 500 bis 900 g/mol auf, ein gewichtsmittleres Molgewicht M_{w} von 700 bis 3000, sowie eine Polydispersität von 1,4 bis 3,0.

Ermittelt wurden die Werte zum zahlenmittleren und gewichtsmittleren Molekulargewicht Mₙ und M_{w} mittels gelpermeationschromatographischer Messungen auf PL-GEL (3-Säulen-Kombination; 1 × Mini-Mix C und 2 × Mini-Mix E). Als Eluent wurde THF verwendet. Zur Kalibrierung wurden Polystyrol/Hexylbenzol-Referenzmaterialien mit Polydispersitäten von <1,1 verwendet. Die angegebenen Werte sind, soweit es sich nicht um Polymere des Styrols handelt, somit als Polystyrol-Äquivalente anzusehen. Verwendete Referenzmaterialien: Polystyrol von 3.000.000 bis 580 g/mol und Hexylbenzol 162 g/mol. Die Methode ist im Analytiker Taschenbuch Bd. 4, Seiten 433 bis 442, Berlin 1984 beschrieben.

Die erfindungsgemäßen Kondensationsharze weisen in der Regel eine Säurezahl gemäß DIN EN 2114 von weniger als 10 mg KOH/g auf, bevorzugt von weniger als 8, besonders bevorzugt von weniger als 5, ganz besonders bevorzugt von weniger als 3, insbesondere weniger als 2 und in speziellen Fällen weniger als 1 mg KOH/g auf.

Die erfindungsgemäßen Kondensationsharze weisen in der Regel eine Hydroxylzahl gemäß DIN ISO 4629 von 5 bis 60 mg KOH/g auf, bevorzugt von 10 bis 50, besonders bevorzugt von 15 bis 45 und ganz besonders bevorzugt von 20 bis 40 mg KOH/g auf.

Die erfindungsgemäßen Kondensationsharze weisen in der Regel eine Verseifungszahl gemäß DIN 53401 von weniger als 100 mg KOH/g auf, bevorzugt von 5 bis 90, besonders bevorzugt von 10 bis 70 und ganz besonders bevorzugt von 20 bis 50 mg KOH/g auf.

Die erfindungsgemäßen Kondensationsharze weisen in der Regel einen Restmonomerengehalt an Aldehyd (III), insbesondere an Isobutyraldehyd, von weniger als 500 Gew.ppm auf, bevorzugt von weniger als 400 Gew.ppm und besonders bevorzugt von weniger als 300 Gew.ppm.

Die erfindungsgemäßen Kondensationsharze weisen in der Regel einen Restmonomerengehalt an Formaldehyd, von weniger als 500 Gew.ppm auf, bevorzugt von weniger als 400 Gew.ppm, besonders bevorzugt von weniger als 300 Gew.ppm, ganz besonders bevorzugt von weniger als 200 und insbesondere von weniger als 100 Gew.ppm auf.

Die erfindungsgemäßen Kondensationsharze weisen in der Regel eine Glasübergangstemperatur T_{g} nach der DSC-Methode (Differential Scanning Calorimetry) gemäß ASTM 3418/82 mit einer Aufheizrate von 2,5 °C/min von weniger als 50 °C auf, bevorzugt von weniger als 40, besonders bevorzugt von weniger als 30, ganz besonders bevorzugt von weniger als 20 °C und insbesondere von weniger als 10 °C auf.

Zu den Aufbaukomponenten der erfindungsgemäßen Harze ist im Einzelnen folgendes auszuführen:
Als Harnstoffe eignen sich solche der allgemeinen Formel (I) oder (II) 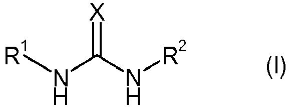 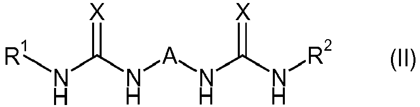 worin R¹ und R² unabhängig voneinander Wasserstoff oder gleiche oder verschiedene C₁ - C₂₀-, bevorzugt C₁- bis C₄-Alkylreste, A einen C₁ - C₂₀-, bevorzugt C₁ bis C₄-, besonders bevorzugt C₁- bis C₃- und ganz besonders bevorzugt C₁- bis C₂-Alkylenrest und X Sauerstoff oder Schwefel, bevorzugt Sauerstoff bedeuten,

Neben Harnstoff oder Thioharnstoff können auch mono- und disubstituierte Harnstoffe sowie Alkylendiharnstoffe eingesetzt werden.

Bevorzugt dient Harnstoff (H₂N-(CO)-NH₂) zur Herstellung der erfindungsgemäßen Harze.

Der Formaldehyd kann als wässrige, z.B. als 30 bis 55%ige, bevorzugt bevorzugt 35 bis 49 %ige, besonders bevorzugt 40 bis 49 %ige Lösung, als Paraformaldehyd oder in Form von Trioxan, Tetroxan oder Formaldehydacetalen eingesetzt werden, bevorzugt in wässriger Lösung.

Da die Kondensation über Hydroxymethylharnstoffe verläuft, kann man an Stelle der Harnstoffe und des Formaldehyds auch die entsprechenden Hydroxymethylharnstoffe einsetzen.

Diese können bevorzugt durch eine Vorkondensation des Formaldehyd mit Harnstoff in situ erzeugt werden, bevorzugt wird das so erhaltene Reaktionsgemisch der Vorkondensation in das erfindungsgemäße Verfahren eingesetzt.

Für eine solche Vorkondensation werden Harnstoff und Formaldehyd im Molverhältnis 1:1 bis 1:15, bevorzugt 1:3 bis 1:10, besonders bevorzugt 1:7 bis 1:9 bei Temperaturen von 20 °C bis 120 °C, bevorzugt 50 - 120 °C für eine Dauer von 10 min bis 6 Stunden umgesetzt. Diese Umsetzung erfolgt bevorzugt bei pH-Werten von bis zu 6, ist aber auch im Alkalischen möglich. Das dabei entstehende Reaktionswasser kann im Reaktionsgemisch belassen werden, kann aber auch zusammen mit dem Wasser, das durch Verwendung von wasserhaltigem Formaldehyd eingebracht wurde, beispielsweise durch Destillation oder Strippen, entfernt werden, bevorzugt durch azeotrope Destillation mit einem Schleppmittel.

Das so erhaltene, vorkondensierte Reaktionsgemisch wird dann in einer bevorzugten Ausführungsform in das erfindungsgemäße Verfahren eingesetzt und der in die Vorkondensation eingesetzte Formaldehyd und Harnstoff bei der Reaktionsstöchiometrie berücksichtigt.

CH-acide Aldehyde können solche der allgemeinen Formel (III) sein 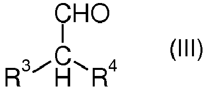 worin die Reste R³ oder R⁴ unabhängig voneinander gleiche oder verschiedene C₁ - C₂₀-, bevorzugt C₁- bis C₄-Alkyl-, C₃ - C₂₀-, bevorzugt C₅- bis C₁₂-Cycloalkyl-, C₆-C₂₀-, bevorzugt C₆- bis C₁₂-Aryl-, oder Alkylarylreste bedeuten oder R³ und R⁴ gemeinsam einen Ring bilden können. Unter CH-aciden Aldehyden sind erfindungsgemäß solche zu verstehen, die an dem der Carbonylgruppe benachbarten Kohlenstoffatom C_{α} genau ein Wasserstoffatom aufweisen.

Beispiel für C₁ - C₂₀-Alkylreste sind Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl und 1,1,3,3-Tetramethylbutyl.

Beispiel für C₃ - C₂₀-Cycloalkylreste sind Cyclopropyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, und Norbornyl.

Beispiele für C₆ - C₂₀-Aryl- oder Alkylarylreste sind Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso-*Propylphenyl, tert.-Butylphenyl, Dodecylphenyl, Benzyl, 1-Phenylethyl, 2-Phenylethyl, α,α-Dimethylbenzyl, Benzhydryl, p-Tolylmethyl und1-(p-Butylphenyl)-ethyl.

Unter C₁-C₄-Alkyl wird im Rahmen dieser Schrift Methyl, Ethyl, *iso*-Propyl, n-Propyl, n-Butyl, *iso*-Butyl, *sek*-Butyl und *tert*-Butyl verstanden, bevorzugt Methyl, Ethyl, n-Propyl und n-Butyl, besonders bevorzugt Methyl und Ethyl und ganz besonders bevorzugt Methyl.

Beispiele für Reste R¹ und R² sind unabhängig voneinander Wasserstoff und C₁ bis C₄-Alkyl, bevorzugt Wasserstoff und Methyl und besonders bevorzugt Wasserstoff.

Möglich Alkylenreste A sind beispielsweise Methylen, 1,2-Ethylen, 1,2-Propylen, 1,3-Propylen, 1,4-Butylen, 1,6-Hexylen, 2-Methyl-1,3-Propylen, 2-Ethyl-1,3-Propylen, 2,2-Dimethyl-1,3-Propylen und 2,2-Dimethyl-1,4-butylen.

Bevorzugte Reste A sind Methylen, 1,2-Ethylen, 1,2-Propylen und 1,3-Propylen, besonders bevorzugt sind Methylen und 1,2-Ethylen und besonders bevorzugt ist Methylen.

Bevorzugt sind die Reste R³ und R⁴ sind unabhängig voneinander bevorzugt Alkyl oder Cycloalkyl, besonders bevorzugt C₁ bis C₄-Alkyl, ganz besonders bevorzugt Methyl, Ethyl, n-Propyl und n-Butyl, insbesondere Methyl, Ethyl und n-Butyl und speziell Methyl.

Bilden die Reste R³ und R⁴ gemeinsam mit dem der Carbonylgruppe benachbarten Kohlenstoffatom C_{α} einen Ring, so handelt es sich dabei bevorzugt um einen fünf- bis zwölfgliedrigen Ring, beispielsweise Cyclopentyl, Cyclohexyl, Cyclooctyl oder Cyclododecyl, bevorzugt Cyclopentyl, Cyclohexyl oder Cyclododecyl und besonders bevorzugt Cyclopentyl oder Cyclohexyl.

Beispiele für CH-acide Aldehyde sind bevorzugt ausschließlich Alkyl- und/oder Cycloalkylgruppen aufweisende CH-acide Aldehyde, besonders bevorzugt Isobutyraldehyd, 2-Ethylhexanal, 2-Methylpentanal und Isovaleraldehyd, ganz besonders bevorzugt Isobutyraldehyd, 2-Ethylhexanal und 2-Methylpentanal und insbesondere Isobutyraldehyd.

Für das erfindungsgemäße Verfahren werden Harnstoff, Formaldehyd und CH-acider Aldehyd in einem Molverhältnis von 1 zu 2 bis 15 zu 2 bis 15, bevorzugt von 1 zu 3 bis 12 zu 3 bis 12, besonders bevorzugt von 1 zu 3,8 bis 9 zu 3,8 bis 9 eingesetzt.

Als Säuren eignen sich anorganische und organische Säuren, vorzugsweise Säuren mit einem pK_{S}-Wert bis zu 3. Beispiele dafür sind Schwefelsäure, Phosphorsäure, Salpetersäure, Salzsäure, Phosphorige Säure (H₃PO₃), Diphosphorsäure (H₄P₂O₇), Sulfonsäuren, besonders bevorzugt Methansulfonsäure, Trifluormethansulfonsäure, para-Toluolsulfonsäure, Benzolsulfonsäure, Dodecylbenzolsulfonsäure, Cyclododecansulfonsäure, Kamphersulfonsäure oder saure Ionentauscher mit Sulfonsäuregruppen, sowie Ameisensäure.

Der Katalysator wird im Allgemeinen in Mengen von 0,5 bis 30 Mol% bezogen auf den CH-aciden Aldehyd eingesetzt, bevorzugt in Mengen von 2 bis 20, besonders bevorzugt 3 bis 10 Mol%

Es können zusätzlich auch Phasentransferkatalysatoren zugesetzt werden.

Bevorzugte Phasentransferkatalysatoren sind tetrasubstituierte Ammoniumsalze, besonders bevorzugt der Formel

⁺NR⁵R⁶R⁷R⁸ X⁻,

worin
R⁵ bis R⁸ jeweils unabhängig voneinander C₁ bis C₂₀-Alkyl oder C₆ bis C₂₀- Alkylarylreste und
X- ein Anion einer Säure bedeuten.

Bevorzugt weisen die Reste R⁵ bis R⁸ in Summe mindestens 8, bevorzugt mindestens 12, besonders bevorzugt mindestens 15 Kohlenstoffatome auf.

Beispiele für Anionen X- sind Chlorid, Bromid, Iodid, Sulfat, Methylsulfat, Ethylsulfat, Methylcarbonat, Trifluormethansulfonat, C₁-C₂₀-Alkylsulfonat oder C₆-C₂₀-Alkylarylsulfonat.

Die Kondensation wird allgemein im Temperaturbereich zwischen 60 und 150, vorzugsweise 80 und 100°C durchgeführt.

Bei der Durchführung des erfindungsgemäßen Verfahrens können Lösungs- und/oder Verdünnungsmittel, gegebenenfalls auch als Schleppmittel zur azeotropen Entfernung von Wasser mitverwendet werden. Als Lösungsmittel zur azeotropen Entfernung von Wasser eignen sich vor allem aliphatische, cycloaliphatische und aromatische Kohlenwasserstoffe oder Gemische davon. Vorzugsweise kommen n-Pentan, n-Hexan, n-Heptan, Cyclohexan, Methylcyclohexan, Benzol, Toluol oder Xylol zur Anwendung. Besonders bevorzugt sind Cyclohexan, Methylcyclohexan, Xylol und Toluol.

Als Lösungsmittel haben sich besonders aromatische Kohlenwasserstoffe bewährt. Unter diesen ist besonders Xylol hervorzuheben.

Beim erfindungsgemäßen Verfahren ist es im Gegensatz zum Stand der Technik nicht zwingend erforderlich, das Reaktionsgemisch wasserfrei zu gestalten. Stattdessen ist es ausreichend, das Wasser aus dem Reaktionsgemisch bis auf einen Gehalt von nicht mehr als 5 Gew%, bevorzugt nicht mehr als 2,5 Gew% abzutrennen.

Die Herstellung des Kondensationsharzes erfolgt erfindungsgemäß in Gegenwart mindestens einer, beispielsweise 1 bis 4, bevorzugt 1 bis 3, besonders bevorzugt 1 bis 2 und ganz besonders bevorzugt genau einer Verbindung (IV), die genau zwei nukleophile Gruppen aufweist, ausgewählt aus der Gruppe bestehend aus Hydroxygruppen (-OH), primären Aminogruppen (-NH₂), sekundären Aminogruppen (-NH-) und Thiolgruppen (-SH), bevorzugt ausgewählt aus der Gruppe bestehend aus Hydroxygruppen (-OH), primären Aminogruppen (-NH₂) und sekundären Aminogruppen (-NH-), besonders bevorzugt ausgewählt aus der Gruppe bestehend aus Hydroxygruppen (-OH) und primären Aminogruppen (-NH₂) und ganz besonders bevorzugt handelt es sich bei den nukleophilen Gruppen um Hydroxygruppen (-OH).

Dabei kann die Verbindung (IV) zwei gleiche nukleophile Gruppen aufweisen, so daß es sich um ein Diol, ein Diamin handelt, die Verbindung (IV) kann aber auch unterschiedliche nukleophile Gruppen tragen, so daß es sich um einen Aminoalkohol oder einen Mercaptoalkohol handelt.

Verbindungen (IV) sind Diole, Diamine, Aminoalkohole und Mercaptoalkohole, besonders bevorzugt sind Diole, Diamine und Aminoalkohole, ganz besonders bevorzugt sind Diole und Aminoalkohole und insbesondere Diole.

Bevorzugt handelt es sich bei dem Diol um ein Alkandiol oder Cycloalkandiol, besonders bevorzugt ein 1,2- oder 1,3-Alkandiol.

Das Diol ist bevorzugt niedermolekular, d.h. es weist bevorzugt ein Molekulargewicht unter 400 g/mol auf.

Besonders bevorzugt handelt es sich bei dem Diol um Ethylenglykol, 1,2-Propandiol, 1,3-Propandiol, 3-Methylpentan-1,5-diol, 2-Ethyl-1,3-Hexandiol, Diethylenglykol, Dipropylenglykol, 2,4-Diethyl-oktan-1,3-diol, 1,1-Dimethylethan-1,2-diol, 2-Butyl-2-ethyl-1,3-Propandiol, 2-Ethyl-2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, 2,2-Bis(4-hydroxycyclohexyl)propan, 1,1-, 1,2-, 1,3- und 1,4-Cyclohexandimethanol, Tetramethylcyclobutandiol, 1,2-, 1,3- oder 1,4-Cyclohexandiol, Cyclooctandiol, Norbornandiol, Pinandiol, Decalindiol, Hydrochinon, Bisphenol A, Bisphenol F, Bisphenol B und Bisphenol S.

Ganz besonders bevorzugt handelt es sich um 1,2-Propandiol, Ethylenglykol, 1,3-Propandiol oder Neopentylglykol.

Beispiele für Diamine sind solche Verbindungen, die zwei primäre und/oder sekundäre Aminogruppen aufweisen, bevorzugt entweder zwei primäre oder zwei sekundäre Aminogruppen und besonders bevorzugt zwei primäre Aminogruppen.

Bevorzugte Diamine sind Alkandiamine, mit einem 2 bis 20, bevorzugt 2 bis 12, besonders bevorzugt 2 bis 6 Kohlenstoffatome aufweisenden linearen oder verzweigten und optional substituierten Alkylenrest, Cycloalkandiamine, mit einem 3 bis 12, bevorzugt 5 bis 6 Kohlenstoffatome aufweisenden optional substituierten Cycloalkylenrest, Arylendiamine, mit einem 6 bis 12, bevorzugt 6 Kohlenstoffatome aufweisenden optional substituierten Arylenrest und 4 bis 12, bevorzugt 4 bis 8 Kohlenstoffatome aufweisende Diazacycloalkane. Unter diesen sind Alkandiamine und Diazacycloalkane bevorzugt, besonders bevorzugt sind Alkandiamine.

Beispiele für Alkandiamine sind 1,2-Ethylendiamin, 1,3-Propylendiamin, 1,4-Butandiamin, 1,5-Pentandiamin, 1,6-Hexandiamin, 2,2,4-Trimethylhexan-1,6-diamin, 2,2,4,4-Tetramethylhexan-1,6-diamin, 1,8-Octandiamin, 1,10-Decandiamin und 1,12-Dodecandiamin, bevorzugt sind 1,2-Ethylendiamin, 1,3-Propylendiamin, 1,4-Butandiamin, 1,5-Pentandiamin und 1,6-Hexandiamin, besonders bevorzugt sind 1,2-Ethylendiamin 1,4-Butandiamin und 1,6-Hexandiamin, ganz besonders bevorzugt sind 1,2-Ethylendiamin und 1,6-Hexandiamin.

Denkbar ist ferner 2,2'-Oxydiethanamin (2-(2'-Aminoethoxy)-ethylamin), Ornithin-C₁-C₄-alkylester oder Lysin-C₁-C₄-alkylester.

### Beispiele für Cycloalkandiamine sind 1,4-, 1,3- oder 1,2-Diaminocyclohexan oder 2,4-, oder 2,6-Diamino-1-methylcyclohexan

Weitere Cycloalkangruppen enthaltende Diamine sind 4,4'- oder 2,4'-Di(aminocyclohexyl)methan, 1-Amino-3,3,5-trimethyl-5-(aminomethyl)cyclohexan (Isophorondiamin), 1,3- oder 1,4-Bis(aminomethyl)cyclohexan sowie 3 (bzw. 4), 8 (bzw. 9)-Bis(aminomethyl)-tricyclo[5.2.1.02.6]decan-Isomerengemische.

Beispiele für Arylendiamine sind 1,2-, 1,3- und 1,4-Phenylendiamine, 2,4- und 2,6-Toluylendiamin sowie deren Isomerengemische.

Ein zu erwähnendes Diazacycloalkan ist Piperazin.

Als Aminoalkohol zu nennen sind beispielsweise Alkanolamine, mit einem 2 bis 20, bevorzugt 2 bis 12, besonders bevorzugt 2 bis 6 Kohlenstoffatome aufweisenden linearen oder verzweigten und optional substituierten Alkylenrest, Cycloalkanolamine, mit einem 3 bis 12, bevorzugt 5 bis 6 Kohlenstoffatome aufweisenden optional substituierten Cycloalkylenrest, Aminophenole, mit einem 6 bis 12, bevorzugt 6 Kohlenstoffatome aufweisenden optional substituierten Arylenrest.

Beispiele für Alkanolamine sind 2-Aminoethan-1-ol, 2-Aminopropan-1-ol, 1-Aminopropan-2-ol, 3-Aminopropan-1-ol, 4-Aminobutan-1-ol, 6-Aminohexan-1-ol, N-Methyldiethanolamin, N-Methyldipropanolamin, 2-Amino-1-phenylethanol und 2-Amino-2-phenylethanol. Bevorzugt sind 2-Aminoethan-1-ol und 2-Aminopropan-1-ol.

Denkbar ist ferner Serin-C₁-C₄-alkylester oder Threonin-C₁-C₄-alkylester.

Cycloalkanolamine sind beispielsweise 2-Aminocyclopentan-1-ol, 2-Aminocyclohexan-1-ol, 2-Aminocyclooctan-1-ol und 2-Aminocyclododecan-1-ol.

Aminophenole sind beispielsweise 2-Aminophenol, 3-Aminophenol und 4-Aminophenol sowie Tyrosin-C₁-C₄-alkylester.

Als Mercaptoalkohole zu nennen sind beispielsweise 2-Mercaptoethanol, 2-Mercaptophenol und 2-Hydroxy-1-propanthiol.

Die Verbindung (IV) kann bereits von Beginn der Reaktion an vorliegen, bevorzugt wird es jedoch zugegeben, wenn Formaldehyd, Harnstoff und CH-acider Aldehyd bereits zumindest teilweise miteinander reagiert haben.

Der Umsatz kann beispielsweise anhand der ausgetragenen Menge Wasser bestimmt werden, aber auch durch Verfolgung der Viskosität des Reaktionsgemischs. Bevorzugt wird der Umsatz bezogen auf die bereits umgesetzten Aldehydfunktionen. Die freien Aldehydfunktionen werden bevorzugt bestimmt nach der Methode von De Jong (DIN EN ISO 9020) und der unumgesetzt CH-acide Aldehyd wird gaschromatographisch bestimmt. Der so bestimmte Umsatz sollte in der Regel mindestens 30%, bevorzugt mindestens 40%, besonders bevorzugt mindestens 50, ganz besonders bevorzugt mindestens 60 und insbesondere mindestens 70% betragen.

In der Regel sollte der Umsatz zum Zeitpunkt der Zugabe der Verbindung (IV) nicht weiter als 99,9% fortgeschritten sein, bevorzugt nicht mehr als 99,5%, besonders bevorzugt nicht mehr als 98%, ganz besonders bevorzugt nicht mehr als 95% und insbesondere nicht mehr als 90%.

Die Verbindung (IV) kann dem Reaktionsgemisch portionsweise oder bevorzugt in einer Zugabe zugegeben werden.

Die Reaktion sollte nach Zugabe der Verbindung (IV) noch mindestens 1 Stunde bei einer Temperatur von 50 bis 150 °C fortgeführt werden, so dass die Verbindung (IV) im Wesentlichen in das Kondensationsharz eingebaut ist. Falls gewünscht kann die Reaktion nach der Zugabe bei Über- oder Unterdruck weitergeführt werden, bevorzugt bei Unterdruck.

Die Menge der Verbindung (IV) beträgt bezogen auf die eingesetzte Menge Harnstoff 0,3 bis 4 Äquivalente, bevorzugt 0,5 bis 3,5 Äquivalente und besonders bevorzugt 0,7 bis 2,5 Äquivalente.

Es stellt eine bevorzugte Ausführungsform dar, die erfindungsgemäße Reaktion zusätzlich in Gegenwart mindestens eines, beispielsweise ein bis drei, bevorzugt ein bis zwei und besonders bevorzugt genau eines Alkohols (V), bevorzugt eines Alkanols, besonders bevorzugt eines C₁ bis C₂₀-Alkanols, ganz besonders bevorzugt eines C₁ bis C₁₀-Alkanols und speziell eines C₂ bis C₈-Alkanols durchzuführen.

Beispiele für Alkohole sind zusätzlich zu den unten aufgeführten Alkanolen beispielsweise Alkylengylkol- und Polyalkylenglykolmonoalkylether mit einem Molgewicht bis zu 300 g/mol, bevorzugt Polyethylenglykolmonoalkylether, bevorzugt Ethylenglykolmonomethylether, Ethylenglykolmonoethylether und 1,3-Propandiolmonomethylether.

Beispiele für Alkanole sind Methanol, Ethanol, *iso*-Propanol, n-Propanol, n-Butanol, *iso*-Butanol, *sek*-Butanol, *tert*-Butanol, n-Pentanol, n-Hexanol, n-Heptanol, n-Octanol, 2-Ethylhexanol, n-Decanol, n-Dodecanol (Laurylalkohol), Stearylalkohol, Cetylalkohol und Laurylalkohol.

Bevorzugte Verbindungen (V) sind Methanol, Ethanol, *iso*-Propanol, n-Propanol und n-Butanol, besonders bevorzugt sind Methanol, Ethanol und n-Butanol, ganz besonders bevorzugt sind Methanol und n-Butanol und insbesondere n-Butanol.

Die Verbindung (V) kann bereits von Beginn der Reaktion an vorliegen, bevorzugt wird sie jedoch zugegeben, wenn Formaldehyd, Harnstoff und CH-acider Aldehyd bereits zumindest teilweise miteinander reagiert haben.

Die Verbindung (V) kann dem Reaktionsgemisch portionsweise oder bevorzugt in einer Zugabe zugegeben werden.

In einer bevorzugten Ausführungsform wird die Verbindung (V) vor der Verbindung (IV) zugegeben.

Die Reaktion sollte nach Zugabe der Verbindung (V) noch mindestens 1 Stunde, bevorzugt mindestens 2 Stunden, ganz besonders bevorzugt mindestens 3 Stunden bei 50 bis 150 °C fortgeführt werden, so dass die Verbindung (V) im Wesentlichen in das Kondensationsharz eingebaut ist.

Falls gewünscht kann die Reaktion nach Zugabe bei Über- oder Unterdruck weitergeführt werden, bevorzugt bei Überdruck.

Die Menge der Verbindung (V) beträgt bezogen auf die eingesetzte Menge Harnstoff 0,05 bis 4 Äquivalente, bevorzugt 0,3 bis 3 Äquivalente und besonders bevorzugt 0,5 bis 1,5 Äquivalente.

Bei Erreichen des gewünschten Molekulargewichts bzw. Umsatzes wird die Kondensation gestoppt.

Zum Stoppen einer sauren Kondensation wird mit einer Base, beispielsweise Natrium- oder Kaliumalkanolat und bevorzugt NaOH oder KOH, neutralisiert und das vorhandene Wasser sowie gegebenenfalls enthaltene, destillativ abtrennbare niedere Oligomere oder unumgesetzte Monomere durch Destillation oder Strippen entfernt.

Analog wird eine basische Kondensation durch Neutralisieren mit Säure gestoppt.

Auf eine Neutralisierung mit Säure kann erfindungsgemäß bevorzugt verzichtet werden.

In der Regel ist es ausreichend, wenn das Salz mit Wasser ausgewaschen und das in der organischen Lösungsmittelphase gelöste Harz vom Lösungsmittel durch Destillation befreit.

Das Lösungsmittel wird in der Regel auf einen Restgehalt von nicht mehr als 5 Gew%, bevorzugt nicht mehr als 4 Gew%, besonders bevorzugt nicht mehr als 3 Gew%, ganz besonders bevorzugt nicht mehr als 2 Gew% und insbesondere nicht mehr als 1 Gew% abgetrennt.

Die Herstellung der erfindungsgemäßen Harze ist diskontinuierlich und kontinuierlich möglich.

Die nach dem erfindungsgemäßen Verfahren hergestellten Kondensationsharze eignen sich insbesondere zur Herstellung von Pigmentpräparationen.

Dazu werden mindestens ein Pigment P und mindestens ein erfindungsgemäßes Kondensationsharz K, sowie gegebenenfalls mindestens ein Verdünnungsmittel V sowie gegebenenfalls mindestens ein Additiv AD miteinander vermischt.

Eine derartige Vermischung kann beispielsweise erfolgen in einem Rührbehälter, Mischer, Extruder oder bevorzugt in einem Dispergator, oder Kneter.

Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente P umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente und Ruß.

Ferner ist Titandioxid als Pigment zu nennen.

Beispiele für Pigmente P sind aufgelistet in WO 97/08255, S. 8, Z. 11 bis S. 11, Z. 16, was hiermit Bestandteil der Offenbarung dieser Schrift sei.

Beispiele für Verdünnungsmittel V sind aromatische und/oder (cyclo)aliphatische Kohlenwasserstoffe und deren Gemische, halogenierte Kohlenwasserstoffe, Ester und Ether.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Ganz besonders bevorzugt sind Xylol und 1-Methoxy-2-propylacetat.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxy-2-propylacetat und 2-Methoxyethylacetat.

Ether sind beispielsweise THF, Dioxan sowie die Mono- und Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxy-2-propylacetat, 2-Methoxyethylacetat, sowie deren Gemische, insbesondere mit den oben aufgeführten aromatischen Kohlenwasserstoffgemischen.

Bevorzugt werden die erfindungsgemäß hergestellten Kondensationsharze zur Einstellung der Viskosität als 70 bis 90%ige Lösung in Xylol oder 1-Methoxy-2-propylacetat formuliert.

Additive AD sind beispielsweise Dispergiermittel, Verlaufshilfsmitteln, Weichmacher und Rheologiehilfsmittel. Derartige Stoffe sind dem Fachmann bekannt.

Gegenstand der vorliegenden Erfindung sind somit auch Pigmentpräparationen, enthaltend
- mindestens ein Pigment P,
- gegebenenfalls mindestens ein Verdünnungsmittel V,
- mindestens ein erfindungsgemäßes Kondensationsharz K sowie
- gegebenenfalls mindestens ein Additiv AD.

Typische Zusammensetzungen für derartige Pigmentpräparationen sind
- 10 - 80 Gew% P,
- 0 - 40 Gew% V,
- 10 - 70 Gew% K sowie
- 0 - 15 Gew% AD,
mit der Maßgabe, dass die Summe immer 100 Gew% beträgt.

Es stellt einen Vorteil der erfindungsgemäßen Kondensationsharze dar, dass durch deren Verwendung in den erfindungsgemäßen Pigmentpräparationen eine höhere Menge Pigment P eingebracht werden kann (Pigmentierungshöhe) und/oder die erforderliche Menge an Verdünnungsmittel V verringert werden kann, jeweils im Vergleich zu analogen Kondensationsharzen mit einem Erweichungspunkt von 80 °C oder mehr.

Zudem wird die Farbstärke der Pigmentpräparationen durch Verwendung der erfindungsgemäßen Kondensationsharze erhöht.

Ferner können die erfindungsgemäßen Kondensationsharze in Kombination mit anderen, üblicherweise als Lackbindemittel zu verwendenden physikalisch trocknenden Filmbildnern, wie Cellulosederivaten, z.B . Nitrocellulose, Ethylcellulose , Celluloseacetat, Celluloseacetobutyrat, Chlorkautschuk, Mischpolymerisaten auf Vinylester-, Vinylether-, Vinylchlorid-, Acrylester-, Vinylaromatenbasis, z.B. Vinylchlorid/Vinyliso-butyläthercopolymerisate oder chemisch trocknenden Bindemitteln, wie Alkydharzen, trocknenden und halbtrocknenden Ölen zur Herstellung von Lacken, wobei der Gehalt dieser Lacke an erfindungsgemäßen Kondensationsharz in weiten Grenzen variieren kann, in den meisten Fällen jedoch nicht mehr als 50 Gew.% des gesamten Bindemittels beträgt.

Die erfindungsgemäßen Lackbindemittel eignen sich unter Anwendung üblicher Applikationsverfahren, wie Streichen, Spritzen, Gießen, zum Lackieren von Substraten, wie Holz, Spanplatten, Papier und Metall, z.B. Eisenblechen.

Die nach den erfindungsgemäßen Verfahren erhaltenen Kondensationsharze sind lagerstabil und weisen eine niedrigere Viskosität auf als vergleichbare, mit Natriummethanolat stabilisierte Kondensationsharze, so dass sich eine geringer Notwendigkeit zur Verwendung flüchtiger organischer Verbindungen ergibt und ein höherer Gehalt an nichtflüchtigen Bestandteilen in den Formulierungen eingestellt werden kann.

Sie lassen sich sehr vorteilhaft verarbeiten. Man erhält Lackierungen mit sehr guten mechanischen Eigenschaften, gutem Glanz, guter Lichtbeständigkeit und guter Wasserfestigkeit. Die erfindungsgemäßen Lackbindemittel sind beispielsweise sehr vorteil-haft in Spritzmattinen, Schnellschliffgrundierungen, Papierlacken und Korrosionsschutzlacken zu verwenden.

Die in den Beispielen angeführten Teile und Prozente bedeuten Gewichtsteile bzw. Gewichtsprozente.

### Beispiele

### Beispiel 1:

60 g (1 mol) Harnstoff wurden zu 245 g 49%-igem wässrigen Formaldehyd (4 Mol) in einem 2L Vierhalskolben mit Bodenauslass, Kühler, Thermometer, Rührer und Tropftrichter gegeben. Danach wurden 69 g 50%-ige Schwefelsäure (0,35 mol) langsam zugetropft und der Kolben auf 60°C erwärmt. Innerhalb von 15 Minuten wurden 288 g (4 mol) Isobutyraldehyd zugetropft und anschließend für drei Stunden auf 80°C erwärmt. Es wurden 430 ml o-Xylol zugetropft, 5 Minuten gerührt und danach die wässrige Phase bei 80°C abgetrennt. Die organische Phase wurde mittels einer azeotropen Destillation getrocknet. Es wurden 300 ml o-Xylol, 7 g (0,04 mol) p-Toluolsulfonsäure und 53 g (0,5 Mol) Neopentylglykol zugegeben. Es wurde solange unter Normaldruck und einem Wasserabscheider destilliert, bis kein Reaktionswasser mehr anfiel. Die organische Phase wurde mit wenig 25%-iger Natronlauge neutralisiert und danach viermal mit je 250 ml Wasser gewaschen. Das Produkt wurde enddestilliert bis zu einer Temperatur von 145°C bei einem Druck von 100 mbar. Es wurden 360 g eines farblosen Harzes erhalten.

### Beispiel 2:

60 g (1 mol) Harnstoff wurden zu 490 g 49%-igem wässrigen Formaldehyd (8 Mol) in einem 2L Vierhalskolben mit Bodenauslass, Kühler, Thermometer, Rührer und Tropftrichter gegeben. Danach wurden 137 g 50%-ige Schwefelsäure (0,7 mol) langsam zugetropft und der Kolben auf 60°C erwärmt. Innerhalb von 15 Minuten wurden 577 g (8 mol) Isobutyraldehyd zugetropft und anschließend für drei Stunden auf 80°C erwärmt. Es wurden 430 ml o-Xylol zugetropft, 5 Minuten gerührt und danach die wässrige Phase bei 80°C abgetrennt. Die organische Phase wurde mittels einer azeotropen Destillation getrocknet. Es wurden 300 ml o-Xylol, 15 g (0,08 mol) p-Toluolsulfonsäure und 63 g (1 Mol) Ethylenglykol zugegeben. Es wurde solange unter Normaldruck und einem Wasserabscheider destilliert, bis kein Reaktionswasser mehr anfiel. Die organische Phase wurde mit wenig 25%-iger Natronlauge neutralisiert und danach viermal mit je 250 ml Wasser gewaschen. Das Produkt wurde enddestilliert bis zu einer Temperatur von 145°C bei einem Druck von 100 mbar. Es wurden 710 g eines farblosen Harzes erhalten.

### Vergleichsbeispiel 1 (analog Beispiel 1 EP 2794 A1)

In einem mit Kühler, Thermometer, Rührer und Tropftrichter ausgestatteten Kolben wurden 750 Teile Formaldehyd 49 %ig, 720 Teile Isobutyraldehyd und 150 Teile Harnstoff gemischt und innerhalb von 10 Minuten mit 150 Teilen 50 %ger Schwefelsäure versetzt. Die Mischung wurde auf 80 °C aufgeheizt und 3 Stunden bei dieser Temperatur kondensiert. Anschließend fügte man 800 Teile Xylol hinzu, ließ 20 Minuten bei 75 °C rühren und trennte nach Abschalten des Rührers die wässrige Phase ab. Die Xylolphase wurde durch azeotrope Destillation vom Restwasser befreit, mit 90 Teilen 30 %iger Natriummethylatlösung versetzt und 1 Stunde bei Rückflußtemperatur gerührt. Danach wurde auf 70°C abgekühlt, mit 75 %iger Schwefelsaure neutralisiert und zweimal mit je 500 Teilen Wasser gewaschen. Nach Abtrennen des Waschwassers wurde aus der Xylolphase bei ca. 100 mbar das Lösungsmittel bis zum Erreichen einer Sumpftemperatur von 145°C abdestilliert.

### Vergleichsbeispiel 2

Vergleichsbeispiel 1 wurde wiederholt, jedoch mit halbierter Menge an Harnstoff.

Vergleich der Viskositäten (gemessen als 65%-ige Lösungen in 1-Methoxy-2-propylacetat):

| | | |
|---|---|---|
| Stabilisierung mit | U : FA : IBA = 1 : 4 : 4 | U : FA : IBA =1: 8 : 8 |
| NaOMe | 1700 mPas (Vergleichsbeispiel 1) | 200 mPas (Vergleichsbeispiel 2) |
| Neopentylglykol (Beispiel 1) | 265 mPas | |
| Ethylenglykol (Beispiel 2) | | 38 mPas |

| | | |
|---|---|---|
| U: Harnstoff, FA: Formaldehyd, IBA: iso-Butyraldehyd | | |

### Beispiele 3 bis 6

### Allgemeine Arbeitsvorschrift

### Für Beispiel 3 bis 6 wurde die Synthese immer wie folgt begonnen:

60 g (1 mol) Harnstoff wurden zu 490 g 49%-igem wässrigen Formaldehyd (8 Mol) in einem 2L Vierhalskolben mit Bodenauslass, Kühler, Thermometer, Rührer und Tropftrichter gegeben. Danach wurden 137 g 50%-ige Schwefelsäure (0,7 mol) langsam zugetropft und der Kolben auf 60°C erwärmt. Innerhalb von 15 Minuten wurden 577 g (8 mol) Isobutyraldehyd zugetropft und anschließend für drei Stunden auf 80°C erwärmt. Es wurden 430 ml o-Xylol zugetropft, 5 Minuten gerührt und danach die wässrige Phase bei 80°C abgetrennt. Die organische Phase wurde mittels einer azeotropen Destillation getrocknet.

### Beispiel 3

Dem gemäß der allgemeinen Arbeitsvorschrift erhaltenen Produkt wurden 300 ml o-Xylol, 15,2 g (0,08 mol) Toluolsulfonsäure-Monohydrat und 104 g Neopentylglykol (1 Mol) zugegeben. Es wurde solange unter Normaldruck und einem Wasserabscheider destilliert, bis kein Reaktionswasser mehr anfiel. Die organische Phase wurde mit wenig 25%-iger Natronlauge neutralisiert und danach viermal mit je 400 ml Wasser gewaschen. Das Produkt wurde enddestilliert bis zu einer Temperatur von 145°C bei einem Druck von 100 mbar. Es wurden 753g eines Harzes erhalten.

### Beispiel 4

Dem gemäß der allgemeinen Arbeitsvorschrift erhaltenen Produkt wurden 300 ml o-Xylol, 15,2 g (0,08 mol) Toluolsulfonsäure-Monohydrat und 61 g Monethanolamin (1 Mol) zugegeben. Es wurde solange unter Normaldruck und einem Wasserabscheider destilliert, bis kein Reaktionswasser mehr anfiel. Die organische Phase wurde mit wenig 25%-iger Natronlauge neutralisiert und danach viermal mit je 400 ml Wasser gewaschen. Das Produkt wurde enddestilliert bis zu einer Temperatur von 145°C bei einem Druck von 100 mbar. Es wurden 524g eines Harzes erhalten.

### Beispiel 5

Dem gemäß der allgemeinen Arbeitsvorschrift erhaltenen Produkt wurden 300 ml o-Xylol, 15,2 g (0,08 mol) Toluolsulfonsäure-Monohydrat und 60 g Ethylendiamin (1 Mol) zugegeben. Es wurde solange unter Normaldruck und einem Wasserabscheider destilliert, bis kein Reaktionswasser mehr anfiel. Die organische Phase wurde mit wenig 25%-iger Natronlauge neutralisiert und danach viermal mit je 400 ml Wasser gewaschen. Das Produkt wurde enddestilliert bis zu einer Temperatur von 145°C bei einem Druck von 100 mbar. Es wurden 548g eines Harzes erhalten.

### Beispiel 6

Dem gemäß der allgemeinen Arbeitsvorschrift erhaltenen Produkt wurden 300 ml o-Xylol, 15,2 g (0,08 mol) Toluolsulfonsäure-Monohydrat und 78 g 2-Mercaptoethanol (1 Mol) zugegeben. Es wurde solange unter Normaldruck und einem Wasserabscheider destilliert, bis kein Reaktionswasser mehr anfiel. Die organische Phase wurde mit wenig 25%-iger Natronlauge neutralisiert und danach viermal mit je 400 ml Wasser gewaschen. Das Produkt wurde enddestilliert bis zu einer Temperatur von 145°C bei einem Druck von 100 mbar. Es wurden 616g eines Harzes erhalten.

Vergleich der Viskositäten (gemessen als 65%-ige Lösungen in 1-Methoxy-2-propylacetat):

| Beispiel | Stabilisierung mit | Viskosität [mPas] |
|---|---|---|
| 3 | Neopentylglykol | 49 |
| 4 | Monoethanolamin | 80 |
| 5 | Ethylendiamin | 185 |
| 6 | 2-Mercaptoethanol | 76 |

### Beispiel 7

60 g (1 mol) Harnstoff wurden mittels 490 g 49%-igem wässrigen Formaldehyd (8 Mol) in einem 2L Vierhalskolben mit Bodenauslass, Kühler, Thermometer, Rührer und Tropftrichter gelöst. Der Ansatz wurde auf 60°C aufgeheizt und es wurden 137 g 50%-ige Schwefelsäure (0,7 mol) innerhalb von 4 Minuten langsam zugetropft. Danach wurden 577 g (8 mol) Isobutyraldehyd innerhalb von 15 Minuten zugetropft und der Ansatz anschließend für drei Stunden bei 80°C gehalten. Es wurden nun 430 mL o-Xylol zugetropft, 5 Minuten gerührt und danach die wässrige Phase bei 80°C abgetrennt. Die organische Phase wurde mittels einer azeotropen Destillation getrocknet. Es wurden nun 300 mL o-Xylol, 15 g (0,08 mol) Toluolsulfonsäure-Monohydrat und 104 g (1 Mol) Neopentylglykol zugegeben. Es wurde nun solange unter Vacuum (ca. 450 mbar, 80°C) und einem Wasserabscheider destilliert, bis kein Wasser mehr erhalten wurde. Die organische Phase wurde mit wenig 25%-iger Natronlauge neutralisiert und danach viermal mit je 400 mL Wasser gewaschen. Das Produkt wurde nun enddestilliert bis zu einer Temperatur von 145°C bei einem Druck von 100 mbar. Es wurden 749 g eines farblosen Harzes erhalten, die mit 80g 1-Methoxy-2-propylacetat (MPA) auf einen Harzanteil von 90,0% und einer Viskosität von 23.500 mPas verdünnt wurden.

### Beispiel 8

60 g (1 mol) Harnstoff wurden mittels 490 g 49%-igem wässrigen Formaldehyd (8 Mol) in einem 2L Vierhalskolben mit Bodenauslass, Kühler, Thermometer, Rührer und Tropftrichter gelöst. Der Ansatz wurde auf 60°C aufgeheizt und es wurden 70 g 98%-ige Schwefelsäure (0,7 mol) innerhalb von 20 Minuten langsam zugetropft. Danach wurden 577 g (8 Mol) Isobutyraldehyd innerhalb von 15 Minuten zugetropft. Danach wurden innerhalb von 5 Minuten 74 g (1 Mol) n-Butanol zugegeben und der Ansatz anschließend für drei Stunden bei 80°C gehalten. Der Rührer wurde abgestellt und nach der Entmischung der Phasen die wässrige Phase bei 80°C abgetrennt. Der organischen Phase wurden 15 g (0,08 mol) Toluolsulfonsäure-Monohydrat und 104 g (1 Mol) Neopentylglykol zugegeben. Es wurde nun solange unter Vacuum (ca. 450 mbar, 80°C) und einem Wasserabscheider destilliert, bis kein Wasser mehr erhalten wurde. Die organische Phase wurde mit wenig 25%-iger Natronlauge neutralisiert, 300 mL o-Xylol zugegeben und danach dreimal mit je 400 mL Wasser gewaschen. Das Produkt wurde nun enddestilliert bis zu einer Temperatur von 145°C bei einem Druck von 100 mbar. Es wurden 755 g eines farblosen Harzes erhalten, die mit 45g MPA auf einen Harzanteil von 94,0% und einer Viskosität von 19.300 mPas verdünnt wurden.

### Beispiel 9

120 g (2 mol) Harnstoff wurden mittels 980 g 49%-igem wässrigen Formaldehyd (16 Mol) in einem 3L Doppelmantelreaktor mit Bodenauslass, Kühler, Thermometer, Rührer und Tropftrichter gelöst. Der Ansatz wurde auf 60°C aufgeheizt und es wurden 140 g 98%-ige Schwefelsäure (1,4 mol) langsam zugetropft (2,5 mL/Minute). Der Ansatz wurde auf 62°C erwärmt. Innerhalb von 30 Minuten wurden 1150 g (16 Mol) Isobutyraldehyd zugetropft und der Ansatz anschließend für eine Stunde bei 80°C gehalten. Danach wurden innerhalb von 5 Minuten 183 g (2 Mol) n-Butanol zugegeben und der Ansatz anschließend für drei Stunden bei 80°C gehalten. Der Rührer wurde abgestellt und nach der Entmischung der Phasen die wässrige Phase bei 80°C abgetrennt. Der organischen Phase wurden 30,5 g (0,16 mol) Toluolsulfonsäure-Monohydrat und 208 g (2 Mol) Neopentylglykol zugegeben. Es wurde nun solange unter Vacuum (ca. 100 mbar, 80°C) und einem Wasserabscheider destilliert, bis kein Wasser mehr erhalten wurde. Die organische Phase wurde mit wenig 50%-iger Natronlauge neutralisiert, 600 mL o-Xylol zugegeben und danach viermal mit je 800 mL Wasser gewaschen. Das Produkt wurde nun enddestilliert bis zu einer Temperatur von 145°C bei einem Druck von 100 mbar. Es wurden 1430 g eines farblosen Harzes erhalten, die mit 65g MPA auf einen Harzanteil von 95,7% und einer Viskosität von 14.500 mPas verdünnt wurden.

| Harz | Rohharzanteil [Gew%] | Viskosität [mPas] |
|---|---|---|
| Bsp 7 | 90,0 | 23.500 |
| Bsp 8 | 94,0 | 19.300 |
| Bsp 9 | 95,7 | 14.500 |

### Anwendungsbeispiele zur Verringerung des VOC-Gehaltes

Zur Herstellung der Pigmentformulierungen wurden die Komponenten gemäß den Gewichtsangaben in der Tabelle miteinander dispergiert und der Gehalt an organischen Komponenten (VOC) in g/l bestimmt.

Die miteinander verglichenen Formulierungen wurden mit der angegebenen Menge Lösungsmittel auf eine vergleichbare Viskosität eingestellt.

### Vergleich A: Anorganisches Gelbpigment mit Harz gemäß Vergleichsbeispiel 1

Das Harz aus Vergleichsbeispiel 1 wurde mit MPA auf eine 60 Gew% eingestellt.

| | |
|---|---|
| Harz gemäß Vergleichsbeispiel 1 (60%ig) | 23,0 TI. |
| MPA | 16,9 TI. |
| Disperbyk 2150 | 4,1 TI |
| Aerosil 200 | 1,0 TI. |
| Bayferrox 3920 | 55,0 TI. |
| VOC | ca. 450 |

### Beispiel A: Anorganisches Gelbpigment mit erfindungsgemäßem Harz

Das Harz aus Beispiel 9 wurde mit MPA auf eine 92 Gew% eingestellt.

| | |
|---|---|
| Harz aus Beispiel 9 (92%ig) | 30,0 TI. |
| MPA | 7,5 TI. |
| Disperbyk 2155 | 4,5 TI. |
| Aerosil 200 | 1,0 TI. |
| Bayferrox 3920 | 57,0 TI. |
| VOC | ca. 250 |

### Vergleich B: Organisches Blaupigment mit Harz gemäß Vergleichsbeispiel 1

Das Harz aus Vergleichsbeispiel 1 wurde mit MPA auf eine 60 Gew% eingestellt.

| | |
|---|---|
| Harz gemäß Vergleichsbeispiel 1 (60%ig) | 34,5 TI. |
| MPA | 38,5 TI. |
| Disperbyk 2150 | 7,0 TI |
| H'Blau L 7101 F | 20,0 TI. |
| VOC | ca. 520 |

### Beispiel B: Organisches Blaupigment mit erfindungsgemäßem Harz

Das Harz aus Beispiel 9 wurde mit MPA auf eine 92 Gew% eingestellt.

| | |
|---|---|
| Harz aus Beispiel 9 (92%ig) | 53,2 TI. |
| MPA | 19,8 TI. |
| Disperbyk 2155 | 7,0 TI. |
| H'Blau L 7101 F | 20,0 TI. |
| VOC | ca. 250 |

### Einsatzstoffe:

MPA: 1-Methoxy-2-propylacetat (organisches Lösemittel als Verdünner eingestzt wird) Disperbyk® 2155: Block-Copolymer mit basischen pigmentaffinen Gruppen als Netz- und Disbergieradditiv der Firma Byk
Aerosil® 200: pyrogene Kieselsäure der Firma Evonik als Thixotropierungsmittel um das Absetzen von Pigmenten zu reduzieren
Bayferrox® 3920: Eisenoxidgelb der Firma Lanxess als anorganisches Pigment Heliogenblau® L 7101 F: Phtalocyaninblau als organisches Pigment

## Patentansprüche

1. Verfahren zur Herstellung von Kondensationsharzen aus mindestens einem Harnstoff, Formaldehyd und mindestens einem CH-aciden Aldehyd, wobei man Harnstoffe der allgemeinen Formel (I) und/oder (II) 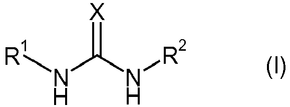 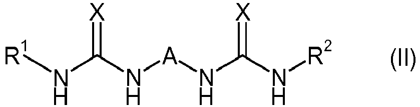 worin R¹ und R² unabhängig voneinander Wasserstoff oder gleiche oder verschiedene C₁ - C₂₀-Alkylreste, A einen C₁ - C₂₀-Alkylenrest und X Sauerstoff oder Schwefel bedeuten, mit Formaldehyd und einem CH-aciden Aldehyd der allgemeinen Formel (III) 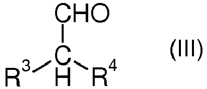 worin die Reste R³ und R⁴ unabhängig voneinander gleiche oder verschiedene Alkyl-, Cycloalkyl-, Aryl-, oder Alkylarylreste bedeuten oder R³ und R⁴ gemeinsam einen Ring bilden können, im Temperaturbereich zwischen 60 und 150°C in Gegenwart von Säuren, gegebenenfalls in Gegenwart von Lösungs- und/oder Verdünnungsmittel umsetzt, **dadurch gekennzeichnet, dass** man die Reaktion des mindestens einen Harnstoffs, Formaldehyd und des mindestens einen CH-aciden Aldehyds in einem Molverhältnis von 1 zu 2 bis 15 zu 2 bis 15 zumindest teilweise in Gegenwart mindestens einer Verbindung (IV) durchführt, ausgewählt aus der Gruppe bestehend aus Diolen, Diaminen, Aminoalkoholen und Mercaptoalkoholen, die zwei nukleophile Gruppen aufweist, ausgewählt aus der Gruppe bestehend aus Hydroxygruppen (-OH), primären Aminogruppen (-NH₂), sekundären Aminogruppen (-NH-) und Thiolgruppen (-SH).

2. Verfahren gemäß Anspruch 1, **dadurch gekennzeichnet, dass** es sich bei der Verbindung (IV) um ein Diol handelt.

3. Verfahren gemäß Anspruch 2, **dadurch gekennzeichnet, dass** es sich bei dem Diol um ein Alkandiol oder Cycloalkandiol handelt.

4. Verfahren gemäß Anspruch 2, **dadurch gekennzeichnet, dass** das Diol ausgewählt ist aus der Gruppe bestehend aus 1,2-Propandiol, Ethylenglykol, 1,3-Propandiol und Neopentylglykol.

5. Verfahren gemäß Anspruch 1, **dadurch gekennzeichnet, dass** es sich bei der Verbindung (IV) um ein Diamin handelt.

6. Verfahren gemäß Anspruch 5, **dadurch gekennzeichnet, dass** es sich bei dem Diamin um ein Alkandiamin oder um ein Cycloalkandiamin handelt.

7. Verfahren gemäß Anspruch 5, **dadurch gekennzeichnet, dass** das Diamin ausgewählt ist aus der Gruppe bestehend aus 1,2-Ethylendiamin, 1,3-Propylendiamin, 1,4-Butandiamin, 1,5-Pentandiamin, 1,6-Hexandiamin, 1,4-, 1,3- oder 1,2-Diaminocyclohexan, 4,4'- oder 2,4'-Di(aminocyclohexyl)methan, 1-Amino-3,3,5-trimethyl-5-(aminomethyl)cyclohexan (Isophorondiamin), 1,3- oder 1,4-Bis(aminomethyl)cyclohexan oder 2,4-, oder 2,6-Diamino-1-methylcyclohexan sowie 3 (bzw. 4), 8 (bzw. 9)-Bis(aminomethyl)-tricyclo[5.2.1.02.6]decan-Isomerengemische.

8. Verfahren gemäß Anspruch 1, **dadurch gekennzeichnet, dass** es sich bei der Verbindung (IV) um einen Aminoalkohol handelt.

9. Verfahren gemäß Anspruch 8, **dadurch gekennzeichnet, dass** der Aminoalkohol ausgewählt ist aus der Gruppe bestehend aus 2-Aminoethan-1-ol, 2-Aminopropan-1-ol, 1-Aminopropan-2-ol, 3-Aminopropan-1-ol, 4-Aminobutan-1-ol, 6-Aminohexan-1-ol, N-Methyldiethanolamin, N-Methyldipropanolamin, 2-Amino-1-phenylethanol und 2-Amino-2-phenylethanol.

10. Verfahren gemäß einem der vorstehenden Ansprüche, **dadurch gekennzeichnet, dass** die Zugabe der Verbindung (IV) erfolgt, nachdem der Umsatz des mindestens einen Harnstoffs, Formaldehyd und des mindestens einen CH-aciden Aldehyds mindestens 30% und nicht mehr als 99,9% beträgt.

11. Verfahren gemäß einem der vorstehenden Ansprüche, **dadurch gekennzeichnet, dass** man die Reaktion des mindestens einen Harnstoffs, Formaldehyd und des mindestens einen CH-aciden Aldehyds nach Zugabe der Verbindung (IV) noch mindestens 1 Stunde bei 50 bis 150 °C fortführt.

12. Verfahren gemäß einem der vorstehenden Ansprüche, **dadurch gekennzeichnet, dass** die Menge der Verbindung (IV) bezogen auf die eingesetzte Menge Harnstoff 0,3 bis 4 Äquivalente beträgt.

13. Verfahren gemäß einem der vorstehenden Ansprüche, **dadurch gekennzeichnet, dass** man die Reaktion zusätzlich in Gegenwart mindestens eines Alkohols (V) durchführt.

14. Verfahren gemäß Anspruch 13, **dadurch gekennzeichnet, dass** der Alkohol (V) ausgewählt ist aus der Gruppe bestehend aus Methanol, Ethanol, *iso*-Propanol, n-Propanol und n-Butanol.

15. Verfahren gemäß Anspruch 13 oder 14, **dadurch gekennzeichnet, dass** die Menge des Alkohol (V) bezogen auf die eingesetzte Menge Harnstoff 0,05 bis 4 Äquivalente beträgt.

16. Verfahren gemäß einem der vorstehenden Ansprüche, **dadurch gekennzeichnet, dass** man als Harnstoffe der allgemeinen Formel (I) und/oder (II) Harnstoff (H₂N-(CO)-NH₂) einsetzt.

17. Verfahren gemäß einem der vorstehenden Ansprüche, **dadurch gekennzeichnet, dass** man als CH-aciden Aldeyhd *iso*-Butyraldehyd einsetzt.

18. Verfahren gemäß einem der vorstehenden Ansprüche, **dadurch gekennzeichnet, dass** man in einer Vorkondensation Harnstoff und Formaldehyd im Molverhältnis 1:2 bis 1:15 bei Temperaturen von 50 - 120 °C für eine Dauer von 10 min bis 6 Stunden umsetzt, CH-aciden Aldehyd hinzugibt und der in die Vorkondensation eingesetzte Formaldehyd und Harnstoff bei der Reaktionsstöchiometrie berücksichtigt wird.

## Claims

1. A process for preparing condensation resins from at least one urea, formaldehyde, and at least one CH-acidic aldehyde, by reacting ureas of the general formula (I) and/or (II) 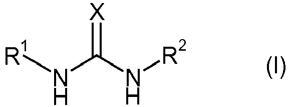 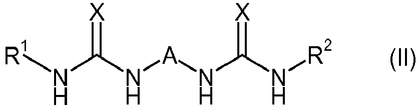 in which R¹ and R² independently of one another are hydrogen or identical or different C₁ - C₂₀ alkyl radicals, A is a C₁ - C₂₀ alkylene radical and X is oxygen or sulfur, with formaldehyde and with a CH-acidic aldehyde of the general formula (III) 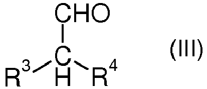 in which the radicals R³ and R⁴ independently of one another are identical or different alkyl, cycloalkyl, aryl or alkylaryl radicals, or R³ and R⁴ may together form a ring, in the temperature range between 60 and 150°C in the presence of acids, if necessary in the presence of solvent and/or diluent, which process comprises carrying out the reaction of the at least one urea, formaldehyde and the at least one CH-acidic aldehyde in a molar ratio of 1:2 to 15:2 to 15 at least partly in the presence of at least one compound (IV) selected from the group consisting of diols, diamines, amino alcohols and mercapto alcohols and has two nucleophilic groups, selected from the group consisting of hydroxyl groups (-OH), primary amino groups (-NH₂), secondary amino groups (-NH-) and thiol groups (-SH).

2. The process according to claim 1, wherein the compound (IV) is a diol.

3. The process according to claim 2, wherein the diol is an alkane diol or cycloalkane diol.

4. The process according to claim 2, wherein the diol is selected from the group consisting of 1,2-propane diol, ethylene glycol, 1,3-propane diol and neopentyl glycol.

5. The process according to claim 1, wherein the compound (IV) is a diamine.

6. The process according to claim 5, wherein the diamine is an alkanediamine or a cycloalkanediamine.

7. The process according to claim 5, wherein the diamine is selected from the group consisting of 1,2-ethylenediamine, 1,3-propylenediamine, 1,4-butane-diamine, 1,5-pentanediamine, 1,6-hexanediamine, 1,4-, 1,3- or 1,2-diaminocyclohexane, 4,4'- or 2,4'-di(aminocyclohexyl)methane, 1-amino-3,3,5-trimethyl-5-(aminomethyl)-cyclohexane (isophoronediamine), 1,3- or 1,4-bis(aminomethyl)cyclohexane or 2,4- or 2,6-diamino-1-methylcyclohexane, and also 3 (or 4),8 (or 9)-bis(aminomethyl)tricyclo[5.2.1.0^{2,6}]decane isomer mixtures.

8. The process according to claim 1, wherein the compound (IV) is an amino alcohol.

9. The process according to claim 8, wherein the amino alcohol is selected from the group consisting of 2-aminoethan-1-ol, 2-aminopropan-1-ol, 1-aminopropan-2-ol, 3-aminopropan-1-ol, 4-aminobutan-1-ol, 6-amino-hexan-1-ol, N-methyldiethanolamine, N-methyl-dipropanolamine, 2-amino-1-phenylethanol and 2-amino-2-phenylethanol.

10. The process according to any of the preceding claims, wherein the compound (IV) is added when the conversion of the at least one urea, formaldehyde and the at least one CH-acidic aldehyde is at least 30% and not more than 99.9%.

11. The process according to any of the preceding claims, wherein the reaction of the at least one urea, formaldehyde and the at least one CH-acidic aldehyde, following addition of the compound (IV), is continued for at least 1 hour at 50 to 150°C.

12. The process according to any of the preceding claims, wherein the amount of the compound (IV), based on the amount of urea used, is 0.3 to 4 equivalents.

13. The process according to any of the preceding claims, wherein the reaction is carried out additionally in the presence of at least one alcohol (V).

14. The process according to claim 13, wherein the alcohol (V) is selected from the group consisting of methanol, ethanol, isopropanol, n-propanol and n-butanol.

15. The process according to claim 13 or 14, wherein the amount of the alcohol (V), based on the amount of urea used, is 0.05 to 4 equivalents.

16. The process according to any of the preceding claims, wherein urea (H₂N-(CO)-NH₂) is used as ureas of the general formula (I) and/or (II).

17. The process according to any of the preceding claims, wherein *iso*-butyraldehyde is used as CH-acidic aldehyde.

18. The process according to any of the preceding claims, wherein, in a precondensation, urea and formaldehyde are reacted in a molar ratio of 1:2 to 1:15 at temperatures of 50 - 120°C for a time of 10 minutes to 6 hours, CH-acidic aldehyde is added and the formaldehyde and urea used in the precondensation is taken into account in the reaction stoichiometry.

## Revendications

1. Procédé de fabrication de résines de condensation constituées d'au moins une urée, de formaldéhyde et d'au moins un aldéhyde CH-acide, selon lequel des urées de formule générale (I) et/ou (II) 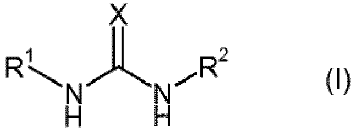 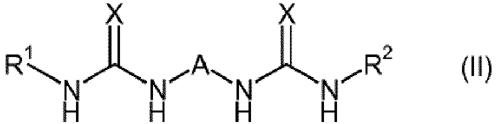 dans lesquelles R¹ et R² signifient indépendamment l'un de l'autre l'hydrogène ou des radicaux alkyle en C₁-C₂₀ identiques ou différents, A signifie un radical alkylène en C₁-C₂₀ et X signifie oxygène ou soufre, sont mises en réaction avec du formaldéhyde et un aldéhyde CH-acide de formule générale (III) 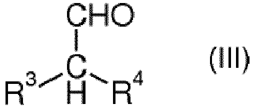 dans laquelle les radicaux R³ et R⁴ signifient indépendamment l'un de l'autre des radicaux alkyle, cycloalkyle, aryle ou alkylaryle identiques ou différents, ou R³ et R⁴ peuvent former ensemble un cycle, dans la plage de température comprise entre 60 et 150 °C en présence d'acides, éventuellement en présence de solvants et/ou de diluants, **caractérisé en ce que** la réaction de ladite au moins une urée, du formaldéhyde et dudit au moins un aldéhyde CH-acide est réalisée en un rapport molaire de 1 sur 2 à 15 sur 2 à 15, au moins en partie en présence d'au moins un composé (IV), choisi dans le groupe constitué par les diols, les diamines, les aminoalcools et les mercaptoalcool, qui comprennent deux groupes nucléophiles, choisis dans le groupe constitué par les groupes hydroxy (-OH), les groupes amino primaires (-NH₂), les groupes amino secondaires (-NH-) et les groupes thiol (-SH).

2. Procédé selon la revendication 1, **caractérisé en ce que** le composé (IV) est un diol.

3. Procédé selon la revendication 2, **caractérisé en ce que** le diol est un alcanediol ou un cycloalcanediol.

4. Procédé selon la revendication 2, **caractérisé en ce que** le diol est choisi dans le groupe constitué par le 1,2-propanediol, l'éthylène glycol, le 1,3-propanediol et le néopentylglycol.

5. Procédé selon la revendication 1, **caractérisé en ce que** le composé (IV) est une diamine.

6. Procédé selon la revendication 5, **caractérisé en ce que** la diamine est une alcane-diamine ou une cycloalcane-diamine.

7. Procédé selon la revendication 5, **caractérisé en ce que** la diamine est choisie dans le groupe constitué par la 1,2-éthylène-diamine, la 1,3-propylène-diamine, la 1,4-butane-diamine, la 1,5-pentane-diamine, la 1,6-hexane-diamine, le 1,4-, 1,3- ou 1,2-diaminocyclohexane, le 4,4'- ou 2,4'-di(aminocyclohexyl)méthane, le 1-amino-3,3,5-triméthyl-5-(aminométhyl)cyclohexane (isophorone-diamine), le 1,3- ou 1,4-bis(aminométhyl)cyclohexane, ou le 2,4- ou 2,6-diamino-1-méthylcyclohexane, ainsi que les mélanges d'isomères de 3 (ou 4), 8 (ou 9)-bis(aminométhyl)-tricyclo[5.2.1.02.6]décane.

8. Procédé selon la revendication 1, **caractérisé en ce que** le composé (IV) est un aminoalcool.

9. Procédé selon la revendication 8, **caractérisé en ce que** l'aminoalcool est choisi dans le groupe constitué par le 2-amino-éthan-1-ol, le 2-aminopropan-1-ol, le 1-aminopropan-2-ol, le 3-aminopropan-1-ol, le 4-aminobutan-1-ol, le 6-aminohexan-1-ol, la N-méthyldiéthanolamine, la N-méthyldipropanolamine, le 2-amino-1-phényléthanol et le 2-amino-2-phényléthanol.

10. Procédé selon l'une quelconque des revendications précédentes, **caractérisé en ce que** l'ajout du composé (IV) a lieu après que la conversion de ladite au moins une urée, du formaldéhyde et dudit au moins un aldéhyde CH-acide soit d'au moins 30 % et d'au plus 99,9 %.

11. Procédé selon l'une quelconque des revendications précédentes, **caractérisé en ce que** la réaction de ladite au moins une urée, du formaldéhyde et dudit au moins un aldéhyde CH-acide est encore poursuivie pendant au moins 1 heure après l'ajout du composé (IV) à une température de 50 à 150 °C.

12. Procédé selon l'une quelconque des revendications précédentes, **caractérisé en ce que** la quantité du composé (IV) par rapport à la quantité utilisée d'urée est de 0,3 à 4 équivalents.

13. Procédé selon l'une quelconque des revendications précédentes, **caractérisé en ce que** la réaction est en outre réalisée en présence d'au moins un alcool (V).

14. Procédé selon la revendication 13, **caractérisé en ce que** l'alcool (V) est choisi dans le groupe constitué par le méthanol, l'éthanol, l'isopropanol, le n-propanol et le n-butanol.

15. Procédé selon la revendication 13 ou 14, **caractérisé en ce que** la quantité de l'alcool (V) par rapport à la quantité utilisée d'urée est de 0,05 à 4 équivalents.

16. Procédé selon l'une quelconque des revendications précédentes, **caractérisé en ce que** l'urée (H₂N-(CO)-NH₂) est utilisée en tant qu'urée de formule générale (I) et/ou (II).

17. Procédé selon l'une quelconque des revendications précédentes, **caractérisé en ce que** l'iso-butyraldéhyde est utilisé en tant qu'aldéhyde CH-acide.

18. Procédé selon l'une quelconque des revendications précédentes, **caractérisé en ce que** l'urée et le formaldéhyde sont mis en réaction lors d'une précondensation en un rapport molaire de 1:2 à 1:15 à des températures de 50 à 120 °C pendant une durée de 10 minutes à 6 heures, l'aldéhyde CH-acide est ajouté, et le formaldéhyde et l'urée utilisés dans la précondensation sont pris en compte dans la stoechiométrie de la réaction.
